# EUROPÄISCHE PATENTSCHRIFT

(11) **EP 0 988 443 B1**
(45) Veröffentlichungstag und Bekanntmachung des Hinweises auf die Patenterteilung: **23.10.2002**
(21) Anmeldenummer: 98932139.3
(22) Anmeldetag: 09.06.1998
(51) Int. Cl.: F01N 3/28, B01J 35/04, B01D 53/94

(54) **RADIALKATALYSATOR, INSBESONDERE FÜR KLEINMOTOREN**
RADIAL CATALYTIC CONVERTER, IN PARTICULAR FOR SMALL ENGINES
CATALYSEUR RADIAL, EN PARTICULIER POUR PETITS MOTEURS

(30) Priorität: 09.06.1997 DE 19724263
(43) Veröffentlichungstag der Anmeldung: 29.03.2000
(73) Patentinhaber: Emitec Gesellschaft für Emissionstechnologie mbH, 53797 Lohmar (DE)
(72) Erfinder: KRUSE, Carsten, D-53797 Lohmar (DE)
(74) Vertreter: Kahlhöfer, Hermann, Dipl.-Phys.
(86) Internationale Anmeldenummer: EP9803456
(87) Internationale Veröffentlichungsnummer: WO98057050

(56) Entgegenhaltungen:
- EP-A- 0 676 534
- US-A- 5 593 645

## Beschreibung

Die Erfindung betrifft einen metallischen Katalysator-Trägerkörper gemäß Oberbegriff von Anspruch 1 sowie einen Folienpaketkörper, welcher insbesondere als Katalysator-Trägerkörper, vorzugsweise für Kleinmotoren Anwendung findet.

Metallische Katalysator-Trägerkörper in Radialbauart sind bekannt. Ein solcher Radialkatalysator ist beispielsweise in der WO 96/09893 beschrieben. Der bekannte Radialkatalysator besteht aus einzelnen aneinandergereihten und aufeinanderliegenden Scheiben, in welche radial verlaufende Strömungskanäle eingelassen sind. Der beschriebene Radialkatalysator ist als Hohlkörper ausgebildet, in welchen der zu reinigende Abgasstrom in sein Inneres einströmt, dort umgelenkt und in radialer Richtung durch die Strömungskanäle zwischen den einzelnen Scheiben nach außen geleitet wird.

Der Nachteil der beschriebenen Radialkatalysatoren besteht darin, daß diese aus einer Vielzahl von einzelnen teilweise strukturierten Scheiben bestehen, welche bei der Fertigung gehandhabt und im Paket zusammengehalten werden müssen. Sie sind daher bezüglich ihrer Herstellung auch relativ kostenintensiv und aus diesem Grunde als Katalysator-Trägerkörper zur Verwendung für Kleinmotoren nicht unbedingt geeignet.

Aus der DE 36 22 115 C1 ist ein Katalysator Trägerkörper in axialer Bauart bekannt, der aus einem aufgeblähten Teilverbundschichtkörper besteht. Herstellung und Halterung dieser Art von Körper sind jedoch relativ aufwendig und dieser Stand der Technik läßt eine Anwendung auf Radialkatalysatoren nicht zu.

Ein weiteres Konzept eines Radialkatalysators geht aus der EP-A-0 676 534 hervor. Dieser Radialkatalysator dient der katalytischen Behandlung von Abgasen und besitzt einen Katalysator-Trägerkörper mit einem Paket von abwechselnd aufeinanderfolgenden, ersten und zweiten Blechelementen. Die Verbindung der benachbart zueinander angeordneten Blechelemente erfolgt mittels Distanzelementen, an die Halteabschnitte der Blechelemente verschweißt oder verlötet werden. Weiter ist ein entsprechendes Herstellungsverfahren aus der EP-A-0 676 534 bekannt, wobei jeweils benachbart zueinander angeordnete Blechelemente mittels Distanzelementen miteinander verbunden werden, wobei die Distanzelemente so ausgebildet werden, dass sie einen Ring um eine Längsachse bilden. Der beschriebene Radialkatalysator ist demnach relativ steif ausgeführt und lässt sich nur mit relativ hohem technischem und kostenintensivem Aufwand fertigen.

Eine kompakte und relativ leichte Wabenstruktur geht aus dem Dokument "Konstruktionslehre" (PAHL G., BEIZ W.; Seiten 98 und 99, 1977, Springer Verlag, Berlin/Heidelberg) hervor. Dort ist ein Folienpaketkörper beschrieben, welcher aus einer Vielzahl von streifenförmigen Folien gebildet ist, wobei jeweils benachbart zueinander angeordnete Folien alternierend zueinander versetzte Verbindungsstellen aufweisen. Die so gebildete Wabenstruktur stellt das Ausgangsprodukt für Leichtbaukonstruktionen dar, wie sie bspw. im Flugzeugbau eingesetzt werden. Die Verwendung derartiger Strukturen zur Reinigung von Abgasen mobiler Brennkraftmaschinen wurde bislang nicht erörtert.

Die Aufgabe der Erfindung besteht daher darin, einen kompakten, effizienten Radialkatalysator zu schaffen, welcher insbesondere für Kleinmotoren anwendbar ist, keine Vergrößerung der Abmessungen des Abgassystems erfordert und kostengünstig herstellbar ist, wobei ein vorgefertigtes Halbzeug in Form eines Folienpaketkörpers geschaffen werden soll, welches in einem einfachen Herstellungsverfahren ohne wesentliche zusätzliche Herstellungsvorrichtungen leicht in einen Katalysator-Trägerkörper insbesondere für Kleinmotoren verformbar ist.

Diese Aufgabe wird durch einen metallischen Katalysator-Trägerkörper mit den Merkmalen gemäß Anspruch 1 und durch einen Folienpaketkörper mit den Merkmalen gemäß Anspruch 2 gelöst.

Zweckmäßige Weiterbildungen sind in den jeweiligen abhängigen Ansprüchen definiert.

Gemäß der Erfindung weist der metallische Katalysator-Trägerkörper, welcher zur Reinigung eines Abgasstromes insbesondere eines Kleinmotors Anwendung findet, eine Wabenstruktur auf, welche aus einer Vielzahl von streifenförmigen hochtemperatur-korrosionsbeständigen Folien besteht. Erfindungsgemäß bilden die Folien einen Folienpaketkörper, welcher im fertiggestellten Zustand eine blockartige Ausgestaltung hat. Bei dem Folienpaketkörper sind jeweils benachbart zueinander angeordnete Folien an Verbindungsstellen, welche voneinander beabstandet und alternatierend zueinander versetzt sind, fest so miteinander verbunden, daß nach einer Wicklung des Folienpaketes zu einem Hohlkörper, welche eine Streckung des Folienpaketes bewirkt, in der Wabenstruktur Strömungskanäle ausgebildet sind, welche in einer senkrechten Richtung zur Längsachse des Trägerkörpers verlaufen oder zumindest eine radiale Richtungskomponente dazu aufweisen.

Ein wesentlicher Vorteil des erfindungsgemäßen Katalysator-Trägerkörpers besteht darin, daß durch die Verwendung eines vorgefertigten Halbzeuges als Folienpaket einerseits zahlreiche Einzelteile in Form von Scheiben, wie sie im Stand der Technik bekannt sind, vermieden werden und andererseits durch das einfache Legen des an sich flexiblen Folienpaketes um einen Dorn, ein Rohr oder dergleichen zu einem im wesentlichen zylindrischen oder kegelstumpfförmigen Hohlkörper keine komplizierten Herstellungsverfahren für die Herstellung des eigentlichen Katalysator-Trägerkörpers erforderlich sind. Wenn das Folienpaket zu einem Hohlkörper geformt ist, so ist es lediglich erforderlich, die beiden dann aneinanderstoßenden Endfolien miteinander zu verbinden, ohne daß weitere Einrichtungen erforderlich sind, den Katalysator-Trägerkörper zusammenzuhalten oder den Katalysator-Trägerkörper insgesamt in Form zu halten. Dadurch ist es möglich, insbesondere kleinere Katalysatoren zur Reinigung von Abgasströmen von Kleinmotoren sehr kostengünstig herzustellen und leicht auf die Abmessungen eines vorhandenen, ausgelegten Abgasleitungssystems anzupassen.

Der insbesondere zur Verwendung als Katalysator insbesondere für Kleinmotoren vorgesehene zu einem Rotationshohlkörper verformbare Folienpaketkörper besteht erfindungsgemäß aus einer Vielzahl von streifenförmigen Folien, welche an entsprechenden Verbindungsstellen miteinander verbunden sind, wodurch im Herstellungszustand ein blockartiges Paket entsteht, bei welchem sich benachbart zueinander angeordnete Folien berühren. Die Verbindungsstellen der Folien sind bei jeweils benachbart zueinander angeordneten Folien alternierend zueinander versetzt und fest so miteinander verbunden, daß bei Streckung des Folienpaketkörpers eine im wesentlichen flache flexible Wabenstruktur entsteht. Die erfindungsgemäße flexible Wabenstruktur kann vorzugsweise auch dadurch gestreckt werden, daß die an sich flach ausgebildete Wabenstruktur um einen Dorn bzw. ein Rohr gewickelt wird, so daß bei entsprechender Verbindung der Endstücke der flexiblen Wabenstruktur ein im wesentlichen zylindrischer oder kegelstumpfförmiger Hohlkörper entsteht. Dieser zylindrische Hohlkörper ist an sich stabil und benötigt keine weiteren Halteelemente, um ihn in Form zu halten. Er kann daher ohne weiteres in entsprechende Abgassysteme insbesondere für Kleinmotoren integriert werden, und zwar so, daß keine Änderung der Abmessungen eines bestehenden Abgassystems erforderlich ist, wobei ein derartiger Katalysator-Trägerkörper, welcher aus einem erfindungsgemäßen Folienpaketkörper hergestellt ist, sehr kostengünstig bezüglich seiner Herstellung ist.

Gemäß einem bevorzugten Ausführungsbeispiel sind die jeweils benachbart zueinander angeordneten Folien mit über die Breite der Folie linienförmig ausgebildeten Verbindungsstellen versehen. Derartige linienförmige Verbindungsstellen, welche schräg oder im wesentlichen rechtwinklig zur Längsseitenkante der streifenförmigen Folien verlaufen, bieten den Vorteil, daß der entstehende Folienpaketkörper sehr streckfähig ist und damit eine sehr flexible Wabenstruktur entsteht, welche auch auf einen Dorn mit relativ geringem Durchmesser wickelbar ist.

Gemäß einem weiteren bevorzugten Ausführungsbeispiel sind die Verbindungsstellen flächenförmig ausgebildet. Vorzugsweise sind die Verbindungsstellen als Rechteckflächen ausgebildet, welche im wesentlichen senkrecht zu den Längsseitenrändern der streifenförmigen Folien verlaufen oder - gemäß einem weiteren bevorzugten Ausführungsbeispiel - auch schräg dazu angeordnet sein können.

Gemäß einem weiteren bevorzugten Ausführungsbeispiel sind die Verbindungsstellen dreiecksförmig oder trapezförmig ausgebildet. Dreiecksförmige oder trapezförmige Verbindungsstellen besitzen den Vorteil, daß beim Wikkeln des Folienpaketkörpers in einen zylindrischen Hohlkörper dessen Form keine tonnenförmigen Abweichungen von der Zylinderform aufweist, wie es der Fall ist bei im wesentlichen senkrecht zur Längsseitenkante der streifenartigen Folie verlaufenden, linienförmig oder rechteckförmig in Form einer Fläche ausgebildeten Verbindungsstellen.

Es ist auch möglich zur besseren Anpassung an Kegelformen die Abstände zwischen den einzelnen Verbindungsstellen in Richtung der streifenförmigen Folien zunehmen und/oder die Breite der Verbindungsstellen abnehmen zu lassen, wodurch später entsprechende Kanäle mit zunehmenden Querschnittsflächen beim Formen des Körpers zu einem Hohlkegelstumpf entstehen. Die Fluideintrittsfläche kann durch eine Kegelstumpfform, was bei Radialkatalysatoren sehr günstig für die gleichmäßige Strömungsverteilung ist, in Strömungsrichtung etwa trichterförmig, d. h. sich konisch verjüngend, ausgebildet sein.

Besonders einfach ist der Folienpaketkörper herstellbar, indem die Folien an den Verbindungsstellen geklebt, gelötet oder geschweißt sind. Besonders bevorzugt ist dabei Ultraschallschweißen. Diese Verfahren sind rasch und kostengünstig ausführbar, so daß der als vorgefertigtes Halbzeug bereitgestellte Folienpaketkörper selbst kostengünstig zur Verfügung steht.

Wenn der Folienpaketkörper in einen zylindrischen Hohlkörper gewickelt wird, so bilden die einzelnen Waben der Wabenstruktur in radiale Richtungen verlaufende Strömungskanäle. Für den Einsatz des Folienpaketkörpers als Katalysator-Trägerkörper bestehen die Folien vorzugsweise aus temperaturbeständigem Material und sind vorzugsweise vor dem Herstellen des Folienpaketkörpers bzw. des zylindrischen Hohlkörpers mit Katalysator beschichtet. Es ist jedoch auch möglich, die Katalysatorbeschichtung nach Fertigstellung des Folienpaketkörpers oder nach Fertigstellung des in Form eines zylindrischen Hohlkörpers ausgebildeten Katalysator-Trägerkörpers aufzubringen.

Es sei darauf hingewiesen, daß sich erfindungsgemäße Wabenkörper auch besonders einfach mit einem Washcoat und/oder einer katalytisch aktiven Beschichtung versehen lassen, da diese Beschichtung wegen der vielen verschiedenen vorhandenen Strömungswege durch Tauchen oder Berieseln aus verschiedenen Richtungen aufgebracht werden kann. Die Entfernung überschüssigen Beschichtungsmaterials kann z. B. sehr definiert und gleichmäßig durch anschließende Rotation des Katalysator-Trägerkörpers um seine Längsachse erreicht werden.

Weitere Vorteile, Merkmale und Anwendungsmöglichkeiten der Erfindung werden nachfolgend anhand eines Ausführungsbeispiels näher erläutert. Es zeigen:
- Fig. 1: eine prinzipielle Anordnung des erfindungsgemäßen Radialkatalysators in einem Abgassystem unter prinzipieller Darstellung des Strömungsverlaufs im Innern des Katalysator-Trägerkörpers;
- Fig. 2: ein als Wabenstrukturelement ausgebildeter Folienpaketkörper gemäß der Erfindung; und
- Fig. 3a) bis e): Ausführungsbeispiele der Wabenstruktur nach Fig. 2 gemäß unterschiedlich ausgebildeter, im Folienpaketkörper benachbart zueinander angeordneter Folien.

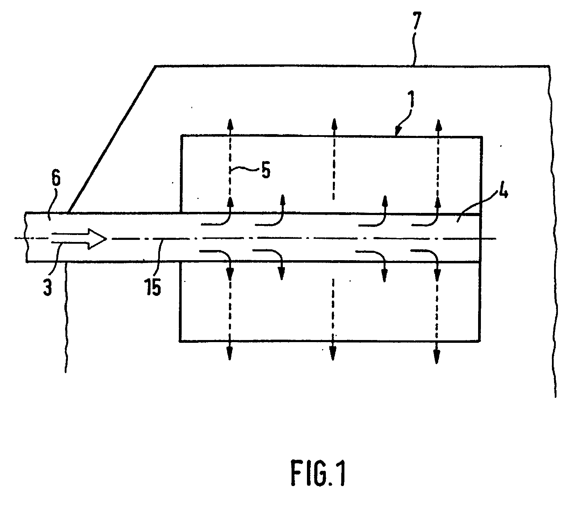

In Fig. 1 ist eine prinzipielle Anordnung eines erfindungsgemäßen Radialkatalysators bzw. Katalysator-Trägerkörpers 1 in einem Abgasleitungsgehäuse 7 unter Darstellung der Strömungswege 3, 5 veranschaulicht. Der Katalysator-Trägerkörper 1 ist als Hohlkörper ausgebildet und weist in seinem Innern einen hohlen Bereich 4 auf. Der Abgasstrom 3 wird über eine Abgasleitung 6 dem inneren Bereich 4 des Katalysator-Trägerkörpers 1 zugeführt, wobei der innere Bereich 4 an seinem stirnseitigen Ende, welches dem Eintrittsbereich des Abgasstroms 3 in den Katalysator-Trägerkörper 1 gegenüberliegt, abgeschlossen. Dadurch wird der Abgasstrom 3 vom inneren Bereich 4 umgelenkt und in radialer Richtung durch die in der Wabenstruktur ausgebildeten Strömungskanäle 8 radial nach außen in den Raum geführt, welcher den Katalysator-Trägerkörper 1 im Abgasleitungsgehäuse 7 umgibt. Der Abgasstrom 3 ist dabei in der Abgasleitung 6 in koaxialer Richtung zur Längsachse 15 des Katalysator-Trägerkörpers 1 geführt.

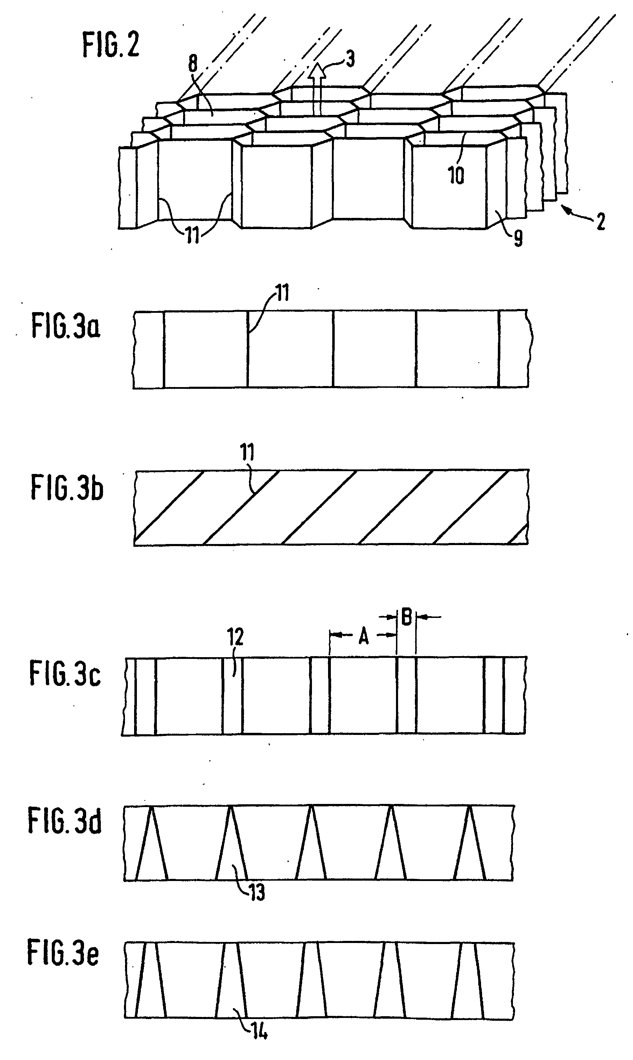

Fig. 2 zeigt die sich durch Streckung des Folienpaketkörpers ergebende Wabenstruktur gemäß einem Ausführungsbeispiel der Erfindung. Dadurch, daß jeweils benachbart zueinander angeordnete Folien an alternierend zu einander versetzten linienförmigen Verbindungsstellen 11 fest miteinander verbunden sind, ergibt sich bei Streckung des im Ausgangszustand im wesentlichen flachen Folienpaketkörpers eine im wesentlichen flache flexible Wabenstruktur mit Strömungskanälen 8. Die Strömungskanäle 8 werden dabei jeweils durch benachbart zueinander angeordnete Folien 9, 10 gebildet. Durch die Strömungskanäle 8 wird der Abgasstrom 3 in einer Richtung senkrecht zur Längsachse 15 des Katalysator-Trägerkörpers 1 geführt. Die nach einer Streckung erzielte flache Wabenstruktur ist so flexibel, daß sie in verschiedene Formen gewickelt werden kann und damit leicht ein Katalysator-Trägerkörper gewünschter Querschnittsform erzielbar ist. Vorzugsweise wird eine derartige flache Wabenstruktur um einen Dorn zu einem im wesentlichen zylindrischen Hohlkörper gewickelt. Es ist jedoch auch möglich, bei entsprechend dünn gewählten Folien und entsprechend flexibler Wabenstruktur die flache Ausgangswabenstruktur um einen eckigen Kern wie zum Beispiel Dreieck, Viereck oder Vieleck oder eine elliptische oder mehr oder weniger flach ovale Form zu wickeln. Damit kann ein Katalysator-Trägerkörper erzielt werden, welcher in eine Form bringbar ist, welche leicht an die durch das Abgasleitungsgehäuse 7 vorgegebene Gehäuseform anpaßbar ist.

In Fig. 3a) bis e) sind verschiedene Ausführungsformen der Verbindungsstellen 11, 12, 13, 14 der zu verbindenden Folien 9, 10 dargestellt. In Fig. 3a) sind linienförmige Verbindungsstellen 11 für benachbart zueinander angeordnete Folien 9, 10 ausgebildet. Diese linienförmigen Verbindungsstellen 11 verlaufen im wesentlichen senkrecht zu den Längsseitenkanten der streifenförmigen Folien 9, 10.

In Fig. 3b) sind die linienförmigen Verbindungsstellen 11 bezüglich der Längsseitenkanten der streifenförmigen Folien 9, 10 schräg ausgebildet. Durch eine derartige schräge Ausbildung der Verbindungsstellen 11 werden im wesentlichen bezüglich eines als Hohlkörper ausgebildeten Katalysator-Trägerkörpers 1 diagonal geführte Strömungskanäle 8 gebildet. Diese Strömungskanäle 8 weisen eine in senkrechte Richtung zur Längsachse 15 verlaufende Richtungskomponente 5 auf. Der Vorteil der diagonal verlaufenden Strömungskanäle 8 liegt darin, daß die Verweilzeit des durch den Katalysator-Trägerkörper strömenden Abgases 3 erhöht und damit die Reinigungseffektivität des Katalysators erhöht wird.

In Fig. 3c) sind im wesentlichen senkrecht zu den Längsseitenkanten der streifenförmigen Folien 9, 10 sich erstreckende flächenförmige Verbindungsstellen 12 mit Breiten B und mit Abständen A untereinander dargestellt. Ein Folienpaketkörper, dessen benachbart zueinander angeordnete Folien 9, 10 durch derartige rechteckflächenförmige Verbindungsstellen 12 miteinander verbunden sind, weist eine größere Festigkeit bei seinem Strecken in eine Wabenstruktur auf.

In Fig. 3d) sind flächenförmige Verbindungsstellen 13 dargestellt, welche dreiecksförmig ausgebildet sind. wenn linienförmige Verbindungsstellen 11 bzw. 12 gemäß Fig. 3a) und 3c) angewendet werden, so ergibt sich beim Wickeln der Wabenstruktur zu einem im wesentlichen zylindrischen Hohlkörper eine tonnenförmige Abweichung von der exakten zylindrischen Form. Dies kann durch dreiecksförmige Verbindungsstellen 13 oder durch trapezförmige Verbindungsstellen 14 vermieden werden, wie sie in Fig. 3e) dargestellt sind. Bei der Bildung von flächenförmigen Verbindungsstellen 12, 13, 14 ist es einerseits möglich, daß die gesamte Fläche der jeweiligen Verbindungsstelle 12, 13 bzw. 14 fest mit der benachbarten Folie 9 bzw. 10 verbunden ist, es ist jedoch andererseits auch möglich, daß lediglich die die Fläche begrenzenden Seitenlinien eine direkte Verbindung zu der jeweiligen benachbarten Folie 9 bzw. 10 bilden.

Mit dem aus einer flachen flexiblen Wabenstruktur als vorgefertigtem Halbzeugelement herstellbaren Katalysator-Trägerkörper ist somit eine Möglichkeit geschaffen, einen kompakten, reinigungseffizienten und kostengünstig herstellbaren Katalysator zu erzeugen. Ein derartiger Katalysator ist insbesondere zur Reinigung eines Abgasstromes von Kleinmotoren geeignet. Der Einsatz derartig einfach aufgebauter und leicht herstellbarer Katalysator-Trägerkörper bedeutet somit keine wesentliche Erhöhung der Herstellungskosten der mit Kleinmotoren ausgerüsteten Arbeitsgeräte und gewährleistet darüberhinaus infolge des gereinigten Abgasstromes einen Beitrag zur Verbesserung der ökologischen Bilanz derartiger Arbeitsgeräte in Verbindung mit einer Verbesserung der gesundheitlichen Bedingungen für die die Arbeitsgeräte benutzenden Personen.

### Bezugszeichenliste

- 1: Katalysator-Trägerkörper
- 2: Folienpaketkörper
- 3: Abgasstrom
- 4: innerer Bereich
- 5: radiale Richtungskomponente der Strömung
- 6: Abgasleitung
- 7: Abgasleitungsgehäuse
- 8: Strömungskanal
- 9: Folie
- 10: Folie
- 11: linienförmige Verbindungsstelle
- 12: flächenförmige Verbindungsstelle
- 13: dreiecksförmige flächenförmige Verbindungsstelle
- 14: trapezförmige Verbindungsstelle
- 15: Längsachse

- A: Abstand der Verbindungsstellen
- B: Breite der Verbindungsstellen

## Patentansprüche

1. Metallischer Katalysator-Trägerkörper (1) mit einer Längsachse (15) zur Reinigung eines Abgasstromes (3), insbesondere eines Kleinmotors, welcher eine aus einer Vielzahl von streifenförmigen Folien (9, 10) ausgebildete Wabenstruktur aufweist, wobei die Folien (9, 10) einen Folienpaketkörper bilden, in welchem jeweils benachbart zueinander angeordnete Folien (9, 10) an voneinander beabstandeten, alternierend zueinander versetzten Verbindungsstellen (11, 12, 13, 14) fest verbunden sind,
**dadurch gekennzeichnet, daß**
nach einer eine Streckung des Folienpaketkörpers bewirkenden Wicklung des Folienpakefkörpers um die Längsachse (15) zu einem Hohlkörper in der Wabenstruktur Strömungskanäle (8) mit zumindest einer in senkrechter Richtung zur Längsachse (15) weisenden Richtungskomponente (5) ausgebildet sind.

2. Zu einem Hohlkörper verformbarer Folienpaketkörper (2), insbesondere zur Verwendung als Katalysator-Trägerkörper, vorzugsweise für Kleinmotoren, welcher aus einer Vielzahl von streifenförmigen Folien (9, 10) gebildet ist, welche an voneinander beabstandeten, bei jeweils benachbart zueinander angeordneten Folien (9, 10) alternierend zueinander versetzten Verbindungsstellen (11, 12, 13, 14) fest so miteinander verbunden sind, daß bei Streckung eine von einem Abgas durchströmbare flexible Wabenstruktur entsteht,
**dadurch gekennzeichnet, daß**
die Folien (9, 10) aus hochtemperatur-korrosionsbeständigem Material bestehen und eine katalytisch aktive Beschichtung aufweisen.

3. Folienpaketkörper (2) nach Anspruch 2, **dadurch gekennzeichnet, daß** der Folienpaketkörper (2) zu einem um eine Längsachse (15) angeordneten Hohlkörper, insbesondere zu einem Hohlzylinder oder einem Hohlkegelstumpf, mit zumindest eine radiale Richtungskomponente (5) aufweisenden Strömungskanälen (8) geformt ist.

4. Körper (1, 2) nach Anspruch 1, 2 oder 3, bei welchem die Verbindungsstellen (11) über die Breite der Folie linienförmig ausgebildet sind.

5. Körper (1, 2) nach Anspruch 1, 2 oder 3, bei welchem die Verbindungsstellen (12, 13, 14) flächenförmig ausgebildet sind.

6. Körper (1, 2) nach Anspruch 4 oder 5, bei welchem die Verbindungsstellen (11) über die Breite der Folie schräg verlaufen.

7. Körper (1, 2) nach Anspruch 5, bei welchem die Verbindungsstellen dreiecksförmig (13) oder trapezförmig (14) ausgebildet sind.

8. Körper (1, 2) nach einem der vorhergehenden Anspüche, bei welchen entlang der streifenförmigen Folien (9, 10) der Abstand (A) zwischen den Verbindungsstellen zunimmt und/oder die Breite (B) der Verbindungsstellen (11) abnimmt.

9. Körper (1, 2) nach einem der vorhergehenden Ansprüche, bei welchem die Verbindungsstellen (11, 12, 13, 14) der Folien geklebt, gelötet oder geschweißt sind, vorzugsweise ultraschall-geschweißt.

10. Körper nach einem der vorhergehenden Ansprüche, bei welchem die Folien (9, 10) aus einer Chrom-Aluminium-Stahllegierung bestehen.

11. Verfahren zur Herstellung eines metallischen Katalysator-Trägerkörpers (1) als Hohlkörper um eine einer Längsachse (15) zur Reinigung eines Abgasstromes (3), insbesondere eines Kleirmaotors, welcher eine aus einer Vielzahl von streifenförmigen Folien (9, 10) ausgebildete Wabenstruktur aufweist, wobei die Folien (9, 10) so zusammen angeordnet werden, daß die Folien (9, 10) einen Folienpaketkörper bilden, in welchem jeweils benachbart zueinander angeordnete Folien (9, 10) an voneinander beabstandeten, alternierend zueinander versetzten Verbindungsstellen (11, 12, 13, 14) fest verbunden werden,
**dadurch gekennzeichnet, daß**
nach einer eine Streckung des Folienpaketkörpers bewirkenden Wicklung des Folienpaketkörpers um die Längsachse (15) zu einem Hohlkörper in der Wabenstruktur Strömungskanäle (8) mit zumindest einer in senkrechter Richtung zur Längsachse (15) weisenden Richtungskomponente (5) ausgebildet werden.

12. Verfahren nach Anspruch 11, **dadurch gekennzeichnet, daß** die Wicklung um einen Dorn aufgeführt wird.

13. Verfahren nach Anspruch 11 oder 12, **dadurch gekennzeichnet, daß** der Katalysator-Trägerkörper (1) aus einem Folienpaketkörper (2) nach einem der Ansprüche 2 bis 10 hergestellt wird.

## Claims

1. A metallic catalyst carrier body (1) with a longitudinal axis (15) for the purification of an exhaust-gas flow (3), in particular of a small engine, which carrier body has a honeycomb structure formed by a multiplicity of strip-shaped foils (9, 10), wherein the foils (9, 10) form a foil assembly structure, in which foils (9, 10) respectively arranged adjacent to one another are securely interconnected at connecting locations (11, 12, 13, 14), which are spaced apart from one another and offset alternatingly in relation to one another, **characterized in that** after winding the foil assembly structure about the longitudinal axis (15) into a hollow body, having the effect of stretching the foil assembly structure, there are formed in the honeycomb structure flow channels (8) with at least a directional component (5) pointing in a perpendicular direction with respect to the longitudinal axis (15).

2. A foil assembly structure (2) which can be formed into a hollow body, in particular for use as a catalyst carrier body, preferably for small engines, which carrier body is formed by a multiplicity of strip-shaped foils (9, 10), which foils are securely interconnected at connecting locations (11, 12, 13, 14) which are spaced apart and in the case of foils respectively arranged adjacent to one another are offset alternatingly in relation to one another, in such a way that, when stretching is carried out, a flexible honeycomb structure through which an exhaust gas can flow is produced, **characterized in that** said foils (9, 10) consist of material which is preferably resistant to high temperatures and corrosion, said foils having a catalytically active coating.

3. The foil assembly structure (2) according to claim 2, **characterized in that** the foil assembly structure (2) is formed into a hollow body arranged about a longitudinal axis (15), in particular into a hollow cylinder or a hollow truncated cone, with flow channels (8) having at least one radial directional component (5).

4. The body (1, 2) according to claim 1, 2 or 3, in which the connecting points (11) are designed in a linear form over the width of the foil.

5. The body (1, 2) as claimed in claim 1, 2 or 3, in which the connecting points (12, 13, 14) are designed in the form of surface areas.

6. The body (1, 2) as claimed in claim 4 or 5, in which the connecting locations (11) run obliquely over the width of the foil.

7. The body (1, 2) as claimed in claim 5, in which the connecting locations are designed in a triangular (13) or trapezoidal (14) form.

8. The body (1, 2) as claimed in one of the preceding claims, in which the spacing (A) between the connecting locations increases and/or the width (B) of the connecting locations (11) decreases along the strip-shaped foils (9, 10).

9. The body (1, 2) as claimed in one of the preceding claims, in which the connecting locations (11, 12, 13, 14) of the foils are adhesively bonded, brazed or welded, preferably ultrasonically welded.

10. The body as claimed in one of the preceding claims, in which the foils (9, 10) consist of a chromium-aluminium-steel alloy.

11. A method for manufacturing a metallic catalyst carrier body (1) as a hollow body about a longitudinal axis (15) for the purification of an exhaust-gas flow (3), in particular of a small engine, which carrier body has a honeycomb structure formed by a multiplicity of strip-shaped foils (9, 10), wherein the foils (9, 10) are arranged together in such a way that the foils (9, 10) form a foil assembly structure, in which foils (9, 10) respectively arranged adjacent to one another are securely interconnected at connecting locations (11, 12, 13, 14), which are spaced apart from one another and offset alternatingly in relation to one another, **characterized in that**, after winding the foil assembly structure about the longitudinal axis (15) into a hollow body, having the effect of stretching the foil assembly structure, flow channels (8) are formed in the honeycomb structure with at least a directional component (5) pointing in a perpendicular direction with respect to the longitudinal axis (15).

12. The method according to claim 11, **characterized in that** the winding is performed about a mandrel.

13. The method according to claim 11 or 12, **characterized in that** the catalyst carrier body (1) is manufactured from a foil assembly structure (2) according to one of claims 2 to 10.

## Revendications

1. Corps support de catalyseur métallique (1) avec un axe longitudinal (15) pour l'épuration d'un flux de gaz d'échappement (3), notamment d'un petit moteur, ledit corps support de catalyseur (1) présentant une structure de nids d'abeilles réalisée à partir d'une multiplicité de feuilles (9, 10) en forme de bandes, les feuilles (9, 10) formant un corps paquet de feuilles dans lequel sont reliées solidement des feuilles (9, 10), agencées respectivement de manière adjacente l'une à l'autre, à des positions de liaison (11, 12, 13, 14) à distance l'une de l'autre et décalées l'une par rapport à l'autre de manière alternée, **caractérisé en ce qu'**après un enroulement du corps paquet de feuilles autour de l'axe longitudinal (15) en un corps creux effectuant un étirage du corps paquet de feuilles, des canaux d'écoulement (8) avec au moins une composante directionnelle (5) montrant en direction perpendiculaire par rapport à l'axe longitudinal (15) sont formés dans la structure de nids d'abeilles.

2. Corps paquet de feuilles (2) pouvant être déformé en un corps creux, notamment pour l'utilisation en tant que corps support de catalyseur, de préférence pour des petits moteurs, qui est formé à partir d'une multiplicité de feuilles (9, 10) en forme de bandes qui sont reliées de telle manière solidement l'une à l'autre à des positions de liaison (11, 12, 13, 14) qui sont à distance l'une de l'autre et, dans le cas de feuilles (9, 10) agencées respectivement de manière adjacente l'une à l'autre, décalées de façon alternante l'une par rapport à l'autre que dans le cas d'étirage une structure de nids d'abeilles flexible pouvant être traversée par un gaz d'échappement est créée, **caractérisé en ce que** les feuilles (9, 10) sont constituées de matériau résistant à des hautes températures et à la corrosion et présentent un revêtement à activité catalytique.

3. Corps paquet de feuilles (2) selon la revendication 2, **caractérisé en ce que** le corps paquet de feuilles (2) est formé en un corps creux agencé autour d'un axe longitudinal (15), notamment en un cylindre creux ou en un cône tronqué creux avec des canaux d'écoulement (8) présentant au moins une composante directionnelle radiale (5).

4. Corps (1, 2) selon la revendication 1, 2 ou 3, dans le cas duquel les positions de liaison (11) sont réalisées en forme de lignes sur la largeur de la feuille.

5. Corps (1, 2) selon la revendication 1, 2 ou 3, dans le cas duquel les positions de liaison(12, 13, 14) sont réalisées en forme d'aires.

6. Corps (1, 2) selon la revendication 4 ou 5, dans le cas duquel les positions de liaison (11) s'étendent de façon oblique sur la largeur de la feuille.

7. Corps (1, 2) selon la revendication 5, dans le cas duquel les positions de liaison sont réalisées en forme triangulaire (13) ou en forme trapézoïdale (14).

8. Corps (1, 2) selon l'une des revendications précédentes, dans le cas duquel l'écart (A) entre les positions de liaison augmente et/ou la largeur (B) des positions de liaison (11) diminue le long des feuilles en forme de bandes (9, 10).

9. Corps (1, 2) selon l'une des revendications précédentes dans le cas duquel les positions de liaison (11, 12, 13, 14) des feuilles sont collées, brasées ou soudées, de préférence soudées par ultrasons.

10. Corps selon l'une des revendications précédentes, dans le cas duquel les feuilles (9, 10) sont constituées d'un alliage chrome-aluminium-acier.

11. Procédé destiné à la fabrication d'un corps support de catalyseur métallique (1) en tant que corps creux autour d'un axe longitudinal (15) pour l'épuration d'un flux de gaz d'échappement (3), notamment d'un petit moteur, qui présente une structure de nids d'abeilles réalisée à partir d'une multiplicité de feuilles en forme de bandes (9, 10), les feuilles (9, 10) étant agencées ensemble de telle façon que les feuilles (9, 10) forment un corps paquet de feuilles dans lequel des feuilles (9, 10) agencées respectivement de manière adjacente l'une à l'autre sont reliées solidement à des positions de liaison (11, 12, 13, 14) à distance l'une de l'autre, décalées de manière alternée l'une par rapport à l'autre, **caractérisé en ce qu'**après un enroulement du corps paquet de feuilles autour de l'axe longitudinal (15) en un corps creux effectuant un étirage du corps paquet de feuilles des canaux d'écoulement (8) avec au moins une composante directionnelle (5) montrant en direction perpendiculaire par rapport à l'axe longitudinal (15) sont formés dans la structure de nids d'abeilles.

12. Procédé selon la revendication 11, **caractérisé en ce que** l'enroulement est effectué autour d'un mandrin.

13. Procédé selon la revendication 11 ou 12, **caractérisé en ce que** le corps support de catalyseur (1) est fabriqué à partir d'un corps paquet de feuilles (2) selon l'une des revendications 2 à 10.
